(19) Europäisches Patentamt
European Patent Office
Office européen des brevets

(11) Publication number: **0 632 454 A1**

# EUROPEAN PATENT APPLICATION

(21) Application number: **94108329.7**

(22) Date of filing: **30.05.94**

(51) Int. Cl.⁶: **G11B 33/04**

(30) Priority: **31.05.93 JP 152861/93**

(43) Date of publication of application:
**04.01.95 Bulletin 95/01**

(84) Designated Contracting States:
**DE FR GB**

(71) Applicant: **SONY CORPORATION**
7-35 Kitashinagawa 6-chome
Shinagawa-ku
Tokyo 141 (JP)

(72) Inventor: **Kobayashi, Daiki, c/o Sony Corporation**

7-35, Kitashinagawa 6-chome,
Shinagawa-ku
Tokyo (JP)
Inventor: **Funawatari, Takatsugu, c/o Sony Corporation**
7-35, Kitashinagawa 6-chome,
Shinagawa-ku
Tokyo (JP)

(74) Representative: **Körber, Wolfhart, Dr. rer.nat. et al**
**Patentanwälte Mitscherlich & Partner,**
Sonnenstrasse 33
D-80331 München (DE)

(54) **Disc cartridge container casing.**

(57) A container casing (10) for a disc cartridge (1) includes an upper casing half (11) and a lower casing half (12). The upper casing half (11) has a rectangular-shaped first planar surface section (13) and three sidewall sections (14-16) integrally formed with the rectangular-shaped first planar section (13) for extending along three sides of the first planar surface section (13), and is formed of a synthetic resin material. The lower casing half (12) has a rectangular-shaped second planar surface section (25) and three sidewall sections (26-28) integrally formed with the rectangular-shaped second planar surface section (25) for extending along three sides of the second planar surface section (25), and is formed of a synthetic resin material. The respective sidewall sections of the upper (11) and lower (12) casing halves are interconnected such that the second planar surface section (25) is parallel to the first planar surface section (13) and an aperture is defined via which the disc cartridge (1) is inserted into the inside of the container casing (10). The mutually parallel sidewall sections of one of the upper (11) and lower (12) halves have first and second protrusions (20,21), while the remaining sidewall section (16) perpendicular to the mutually parallel sidewall sections (14,15) has an engagement rib (19). The mutually parallel sidewall sections (26,27) of the other of the upper casing half (11) and the lower casing half (12) have first and second grooves (30,31) engaged by the first and second protrusions (20,21), while the remaining sidewall section (28) perpendicular to the mutually parallel sidewall sections (26,27) has an engagement recess (34) engaged by the engagement rib (19). The mutually parallel sidewall sections of one of the upper (11) and lower (12) casing halves have a pair of resilient holding portions (23,24) for holding the disc cartridge (1) inserted into the container casing (10) by being engaged with recesses (9a,9b) formed in the disc cartridge (1) inserted via the aperture. The other of the upper (11) and lower (12) casing halves has clearances (26A,27A) for allowing resilient deflection of the resilient holding portions (23,24). The resilient holding portions (23,24) are integrally formed in the mutually parallel sidewall sections of the upper (11) and lower (12) casing halves for being resiliently flexible in directions towards the inside and the outside of the container casing (10).

**FIG.1**

## BACKGROUND

### 1. Field of the Invention

The present invention relates to a container casing for a disc cartridge. More particularly, to a container casing for a disc cartridge having an upper cartridge half and a lower cartridge half.

### 2. Background of the Invention

A so-called sleeve casing has been proposed as a casing for containing a disc cartridge having a cartridge main member and an information recording medium, such as an optical disc, rotatably contained in the cartridge main member. The sleeve casing includes a sheet member of synthetic resin material, such as polypropylene or polyethylene terephthalate, or carton board, which is bent into a casing having an aperture on its one lateral side. The disc cartridge is introduced via the aperture into the inside of the sleeve casing.

The sleeve casing is dimensioned to snugly receive the disc cartridge therein. This permits the disc cartridge contained therein to be held in its housed position under the force of friction between the outer lateral surface of the disc cartridge and the inner lateral surface of the sleeve casing.

With the above-described sleeve casing, formed by bending the sheet member, it is difficult to afford sufficient toughness to the sleeve casing because it has a thickness just large enough to allow for its bending. Consequently, if an external pressure is applied to the sleeve casing having the disc cartridge contained therein, the sleeve casing is deformed easily. The result is that the disc cartridge contained in the sleeve casing is fractured or deformed under the influence of the external pressure.

If a large number of disc cartridges contained in the sleeve casings are stored in a stacked state, the sleeve casings tend to be easily deformed under the weight of the disc cartridges. The result is that the disc cartridges contained in the sleeve casings are fractured or deformed, as in the above case of application of the external pressure.

Since the disc cartridge contained in the sleeve casing is maintained in the housed position under the force of friction between it and the inner lateral surface of the sleeve casing, it may occur that the disc cartridge be detached under vibrations or shocks from the sleeve casing and destroyed on descent upon the floor surface or the like. With the sleeve casing formed by bending the sheet material, it is difficult to provide for a free shape of the aperture via which the disc cartridge is inserted into the sleeve casing, with the result that it becomes difficult or laborious to introduce or detach the disc cartridge into or out of the sleeve casing.

In order to overcome such problem, it may be contemplated to provide a first member as an upper plate member and a second member as a lower plate member and to interconnect the first and second members to constitute a box-shaped container casing for the disc cartridge. The first and second members may be rendered sufficiently tough by being molded of a synthetic resin material by, for example, injection molding. On the other hand, the first and second members become complicated in structure if these are put together using set screws or the like. If the first and second members are interconnected by ultrasonic welding, the surface sections of the first and second members are damaged due to propagation of ultrasonic waves to mar the appearance of the container casing.

In addition, with the container casing produced by interconnecting the first and second members by the ultrasonic welding, the rib portions fused together by application of the ultrasonic waves are scraped due to the ultrasonic wave application to produce the debris which is left within the container casing. Such debris then tends to be intruded into the disc cartridge and deposited on the optical disc surface to interfere with the normal recording/reproduction of information signals. In addition, sufficient durability of the portions of the container casing fused together by ultrasonic welding cannot be maintained under a high temperature high humidity environment with the result that the first member and the second member tend to be detached from each other.

With the container casing comprising first and second members combined together with the aid of an adhesive, it takes some time until curing of the adhesive. Since the adhesive tends to be exuded from the bonded portion, sufficient caution has to be exercised as to a coating amount of the adhesive, resulting in a laborious operation. With the container casing assembled with the aid of the adhesive, sufficient durability of the bonded portions cannot be assured under a high temperature high humidity environment, such that the first and second members tend to be detached from each other.

Such a container casing is described for example in EP-A 564155 in which a first member has an upper plate portion having sidewall sections extending downwards from both lateral sides and the rear side thereof, while a second member also has a bottom plate portion of substantially the same shape as the upper plate portion having sidewall sections extending upwards from both lateral sides and the rear side thereof. These first and second members are put together by a relative sliding movement with the sidewall sections thereof mating with one another for defining an aperture on the front side of the container casing for inserting the disc cartridge.

Such disc cartridge container casing, assembled in accordance with the slide assembling system, is simple in structure and sufficiently tough, while assuring positive protection of the disc cartridge contained therein. The disc cartridge may be easily introduced into and detached via the aperture. In addition, the first and second members may be put together by an extremely simple operation.

With the above-described disc cartridge container casing, mounting portions are integrally formed on the sidewall sections of one of the first and second members in the vicinity of the rear sidewall section thereof, and engagement members are built in these mounting portions for constituting a holding mechanism for holding the disc cartridge contained in the container casing. The mounting members of the holding mechanism are constituted by a pair of mounting pieces of the L-shaped cross-section, facing each other, and resilient engagement members having substantially the U-shaped cross-section are fitted between these mounting pieces. When the disc cartridge is inserted into the disc cartridge container casing, the resilient engagement members are caused to bear against both lateral sides of the disc cartridge for positively holding the disc cartridge in position within the container casing.

With the above-described disc cartridge container casing of the slide assembling system, it is necessary to provide the resilient engagement members as separate members for holding the disc cartridge in position within the container casing. The result is the increased number of the assembling operations and increased cost. In addition, the operation of assembling the first and second members together needs to be carried out while it is simultaneously checked if the resilient engagement members have been correctly fitted in the mounting portions, thus necessitating the inspecting operations and complicating the assembling operations.

In addition, the mounting pieces constituting the mounting portions of the resilient engagement members are integrally formed in the lateral sidewall sections of one of the first and second members, resulting in a nonuniform plate thickness of the lateral sidewall sections at the proximal ends of the mounting pieces. Consequently, sink marks tend to be produced on the surfaces of the sidewall sections due to the molding distortion. Since the stress is concentrated at the proximal portions of the mounting pieces, the mounting pieces tend to be deformed or fractured under the effect of descent impacts.

## SUMMARY OF THE INVENTION

It is, therefore, a principal object of the present invention to provide a disc cartridge container casing which resolves the above-mentioned problems.

According to the present invention, there is provided a container casing for a disc cartridge including first and second members. The first member has a rectangular first planar surface section and sidewall sections formed integrally with the first planar surface section and extending along three sides of the first planar surface section. The second member has a rectangular second planar surface section and sidewall sections formed integrally with the second planar surface section and extending along three sides of the second planar surface section. The second member has the second planar surface section extending parallel to the first planar surface section and has its sidewall sections connected to the sidewall sections of the second member for defining an aperture via which the disc cartridge is inserted into the container casing. A pair of resilient holding portions are engageable with mating recesses in the disc cartridge inserted via the aperture for holding the inserted disc cartridge. These resilient holding portions are integrally and resiliently flexibly formed on mutually facing sidewall sections of the first member or the second member.

According to the present invention, there is also provided a container casing for a disc cartridge including first and second members. The first member is molded from a synthetic resin material and has a rectangular first planar surface section and sidewall sections formed integrally with the first planar surface section and extending along three sides of the first planar surface section. The second member is molded from a synthetic resin material and has a rectangular second planar surface section and sidewall sections formed integrally with the second planar surface section and extending along three sides of the second planar surface section. The second member has the second planar surface section extending parallel to the first planar surface section and has its sidewall sections connected to the sidewall sections of the second member for defining an aperture via which the disc cartridge is inserted into the container casing. The mutually parallel sidewall sections of one of the first member and the second member have first and second protrusions, the remaining sidewall section perpendicular to the mutually parallel sidewall sections has an engagement rib, the mutually parallel sidewall sections of the other of the first member and the second member have first and second grooves engageable with the first and second protrusions, the remaining sidewall section perpendicular to those mutually parallel sidewall sections has an engagement recess engaged by the engagement rib, the mutually parallel sidewall sections of one of the first member and the second member have a pair of resilient holding portions for holding the disc cartridge inserted into the container casing by being engaged with a recess formed in the disc cartridge inserted via the aperture. The resilient holding portions are integrally formed so as to be resiliently flexible in directions towards the inside and the outside of the casing.

According to the present invention, there is also provided a container casing for a disc cartridge including first and second members and a pair of arm-shaped resilient holding portions. The first member has a rectangular first planar surface section and sidewall sections formed integrally with the first planar surface section and extending along three sides of the first planar surface section. The second member has a rectangular second planar surface section and sidewall sections formed integrally with the second planar surface section and extending along three sides of the second planar surface section. The second member has the second planar surface section extending parallel to the first planar surface section and has its sidewall sections connected to the sidewall sections of the second member for defining an aperture via which the disc cartridge is inserted into the container casing. A pair of arm-shaped resilient holding portions are engageable with mating recesses in the disc cartridge inserted via the aperture for holding the inserted disc cartridge. These arm-shaped resilient holding portions are integrally and resiliently flexibly formed on mutually facing sidewall sections of the first member or the second member. The distance between the free ends of the arm-shaped resilient holding portions is narrower than the length of the forward side of the disc cartridge inserted via said aperture into the container casing.

By integrally forming the resilient holding portions for holding the inserted disc cartridge with one of the two members making up the container casing, the number of the component parts and the number of the assembling steps may be reduced. Since the engagement portions of the resilient holding portions are engaged with the recesses of the disc cartridge, there is no risk of the disc cartridge or the container casing being scraped on application of vibrations or shocks to the container casing containing the disc cartridge to produce the debris liable to be deposited on the surface of the recording medium contained in the disc cartridge.

BRIEF DESCRIPTION OF THE DRAWINGS

The invention will be more readily understood with reference to the accompanying drawing, wherein:

FIG. 1 is an exploded perspective view for illustrating a disc cartridge container casing according to the present invention;
FIG. 2 is an exploded perspective view showing the disc cartridge container casing shown in FIG. 1;
FIG. 3 is a plan view showing the disc cartridge container casing shown in FIG. 1;
FIG. 4 is a front view showing the disc cartridge container casing shown in FIG. 1;
FIG. 5 is a perspective view showing a bottom plate member constituting the disc cartridge container casing shown in FIG. 1, looking from above the bottom plate member;
FIG. 6 is a perspective view showing an upper plate member constituting the disc cartridge container casing shown in FIG. 1, looking from below the upper plate member;
FIG. 7 is a plan view showing the upper plate member;
FIG. 8 is a longitudinal cross-sectional view of the upper plate member;
FIG. 9 is a fragmentary side view showing the upper plate member;
FIG. 10 is a plan view showing the disc cartridge container casing containing the disc cartridge, with the exclusion of the bottom plate member; and
FIG. 11 is a schematic cross-sectional view for illustrating the state in which an engaging portion of a resilient retention portion of the disc cartridge container casing is engaged in a clamping recess in the disc cartridge.

DESCRIPTION OF INVENTION

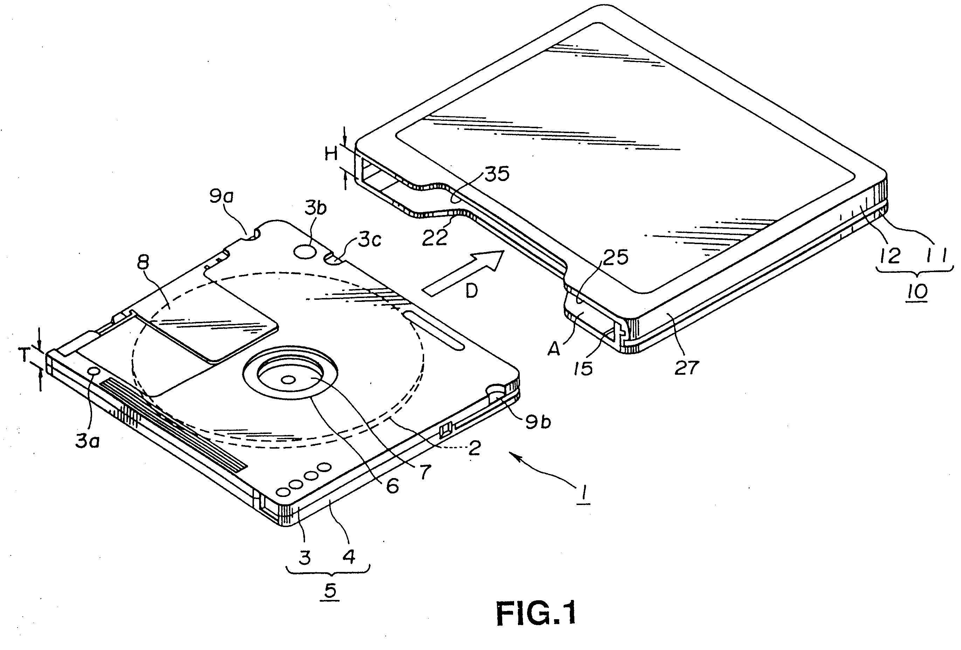

Referring to the drawings, preferred embodiments of the present invention will be explained in detail. A disc cartridge container casing 10 of the present invention is made up of an upper member 11 as a first member and a bottom member 12 as a second member, and contains therein a disc cartridge 1 rotatably housing an optical disc 2, as shown in FIG. 1. Turning to the schematic construction of the disc cartridge 1 contained in the container casing 1, the disc cartridge 1 includes a cartridge main body 5 in the form of a thin substantially rectangular casing made up of a saucer-shaped upper half 3 of a shallow depth of a synthetic material and a similarly saucer-shaped lower half 4 of a shallow depth of a synthetic material as shown in FIG. 1. An optical disc 2 as a recording medium is rotatably housed within the cartridge main body 5.

In a mid part of the lower half 4 is formed a circular aperture 6 via which a disc table of a recording/ reproducing apparatus driving the optical disc 2 contained in the cartridge main body 5 is introduced when the disc cartridge 1 is loaded on the recording/reproducing apparatus. In the aperture 6 for disc insertion is mounted a magnet-clamping metal plate 7 which is provided for closing a center aperture of the optical disc 2 contained in the cartridge main body 5.

The upper half 3 and the lower half 4 are formed with recording/reproducing apertures, not shown, via which at least a portion of the signal region of the optical disc 2 rotatably contained in a disc containing sections thereof is exposed to outside across the inner and outer rims of the disc. These recording/reproducing apertures are rectangular-shaped and extended from a position proximate to the mid aperture 6 of the cartridge main body 5 up to the front side of the cartridge main body 5.

A shutter member 8 for opening or closing the recording/reproducing apertures is slidably mounted on the cartridge main body 5 for preventing dust and dirt from being intruded from the recording/reproducing apertures into the inside of the cartridge main member 5. The shutter member 8 is a thin rectangular metal plate having a U-shaped cross-section. The shutter member 8 has a shutter part for opening or closing the recording/reproducing apertures, a connecting part interconnecting the shutter parts at the proximal portions thereof, and first and second slide guides on both sides of the connecting part. When the disc cartridge 1 is loaded on the recording/reproducing apparatus, a shutter opening member provided on the recording/reproducing apparatus is intruded into a guide groove formed in the front lateral surface of the cartridge main member 5 for sliding the shutter member 8 from a position of closing the recording/reproducing apertures to a position of opening the apertures.

In the lateral sides towards the front side of the upper half 3 of the cartridge main body 5 are formed positioning holes 3a, 3b for positioning the disc cartridge 1 loaded on the recording/reproducing apparatus. One of the lateral sides of the upper half 3 is formed with a cut-out 3c for discriminating the types of the optical disc contained in the cartridge main body 5. The lateral sides of the cartridge main member 5 towards the side thereof formed with the cut-out 3c are formed with U-shaped clamping recesses 9a, 9b.

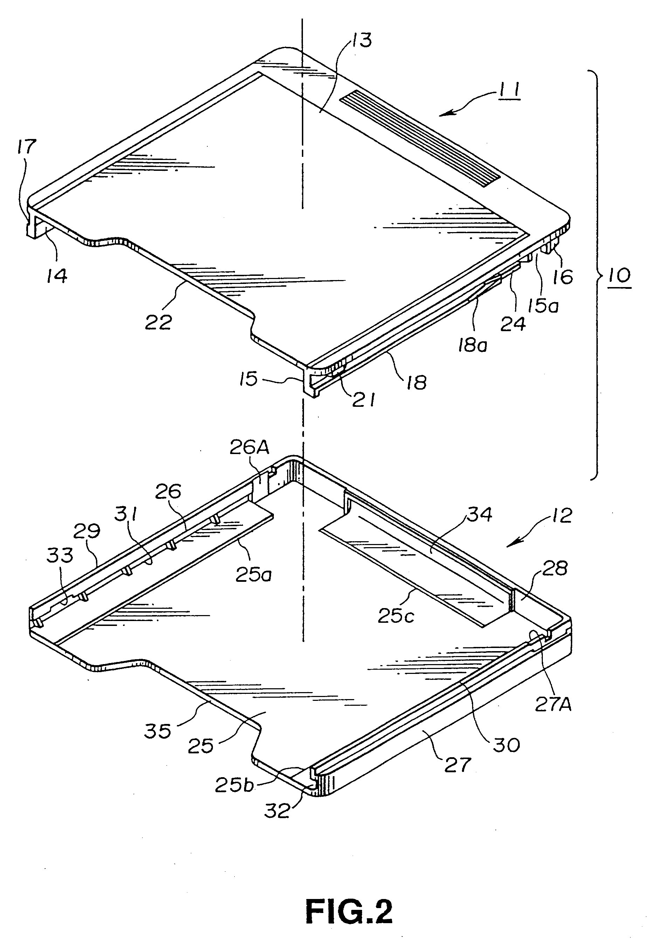

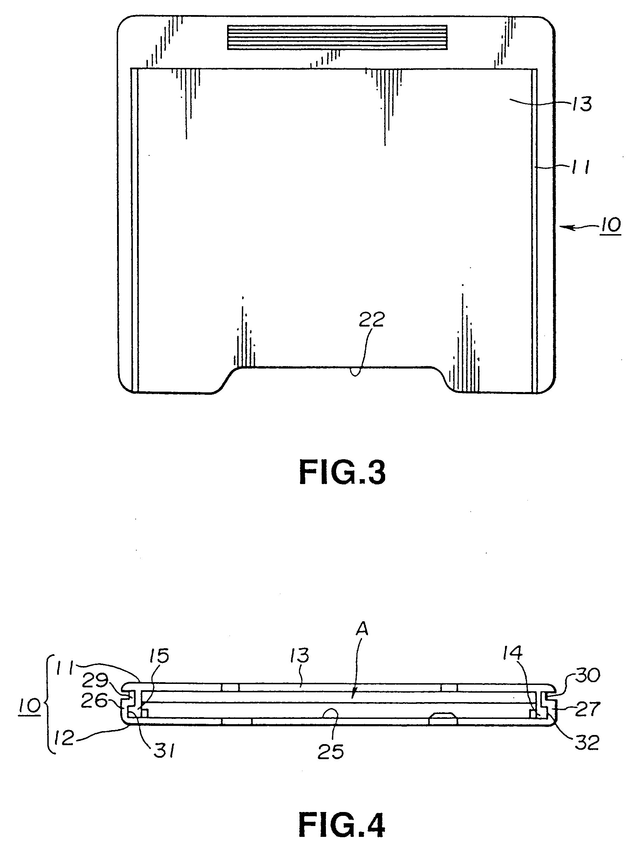

The container casing 10, for containing and storing the above-described disc cartridge 1 when not in use, is made up of the upper member 11 and the bottom member 12, as described hereinabove. The upper member 11 has an upper plate portion 13 having the shape and the outer size substantially equal to those of the major surface of the disc cartridge 1, as shown in FIGs. 2 and 3. The upper member 11 is molded from a transparent synthetic resin material, such as acrylic resin, ABS resin, polycarbonate or polystyrene, by injection molding or the like.

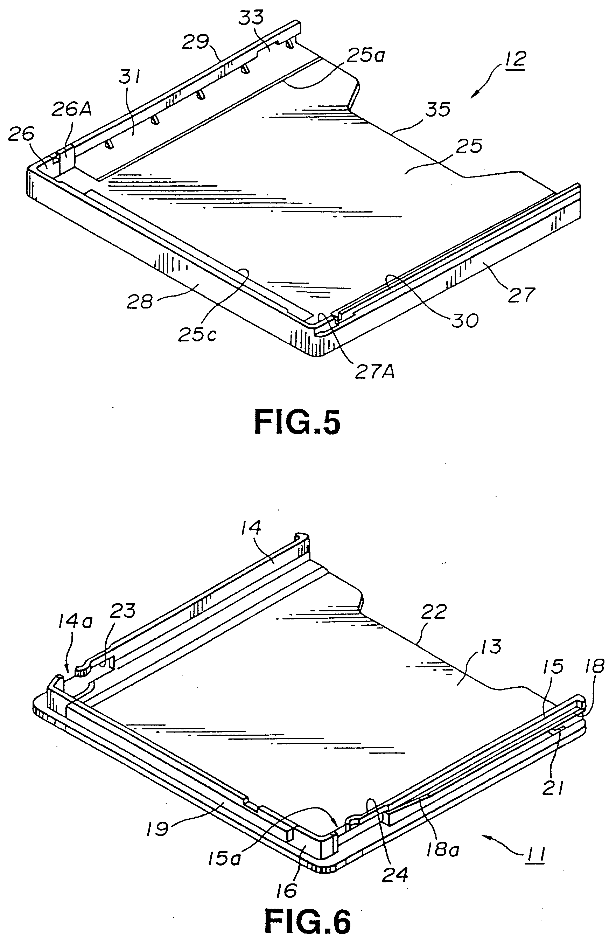

The lower surface of the upper plate portion 13 of the upper member 11 is formed with upstanding sidewall sections 14, 15 extending parallel to the lateral side edges on both lateral sides of the upper plate portion 13, and a sidewall section 16 extending parallel to the rear edge of the plate portion 13, as shown in FIG. 6. These sidewall sections 14 to 16 are formed for delimiting a circumferential U-shaped peripheral wall sections on the lower surface of the upper plate portion 13 excluding its front side. The rear portions of the lateral wall sections 14 and 15 are formed with heightwise cut-outs 14, 15. Adjacent to the cut-outs 14a, 15a are formed resilient retention portions 23, 24, as later described, as one with the rear ends of the lateral sidewall sections 14 and 15, respectively.

These sidewall sections 14 to 16 are of a height H approximately equal to the thickness $\underline{T}$ of the disc cartridge 1, and are formed at an inwardly offset position from the lateral side edges of the upper plate member, with an offset corresponding to the plate thickness, as shown in FIG. 1. On the outer lateral sides of the sidewall sections 14, 15 are formed engagement ribs 17, 18, facing the upper plate portion 13, respectively, as shown in FIG. 2. On the outer lateral side of the rear sidewall section 16 is also formed an engagement rib 19 extending from a mid portion along its width towards both ends of the sidewall section 19.

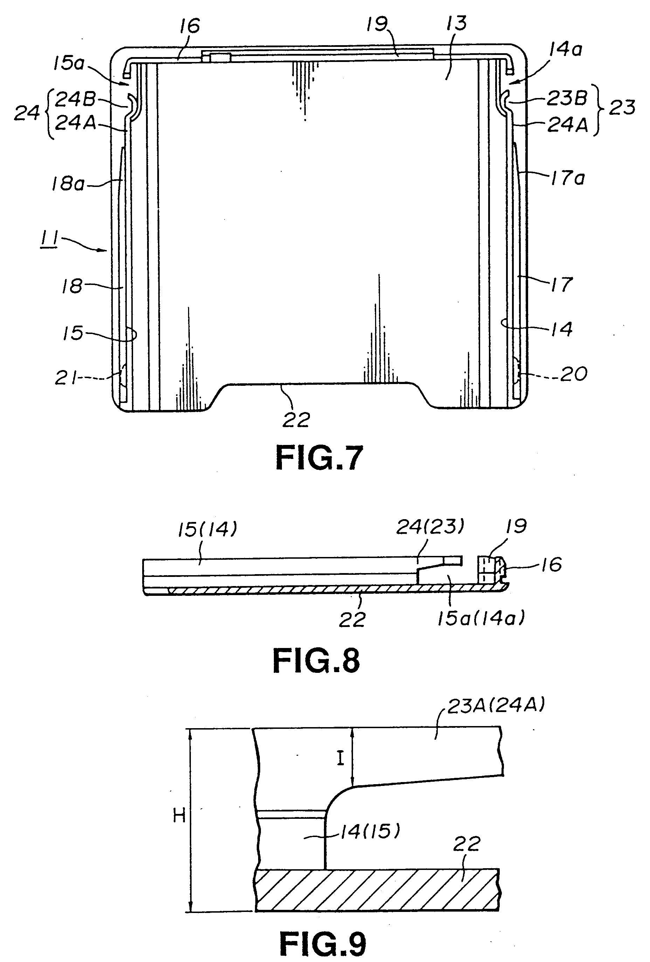

The engagement ribs 17, 18 are protuberantly formed on the outer lateral surfaces of the lateral sidewall sections 14, 15 for extending from the front end towards the rear side cut-outs 14a, 15a of the lateral sidewall sections 14, 15, as shown in FIGs. 6 and 7. The engagement ribs 17, 18 are tapered at 17a, 18a, respectively, so that the projecting dimensions are gradually decreased at the rear ends thereof. These tapers 17a, 18a provided at the rear ends of the engagement ribs 17, 18 play the role of guides when the upper member 11 is combined with the bottom member 12, as will be explained subsequently.

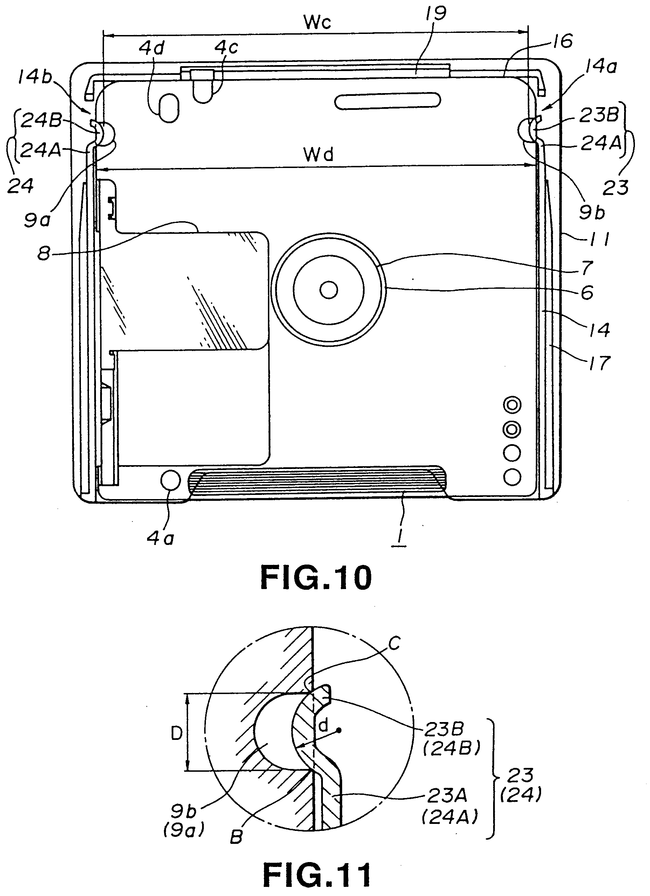

The forward parts of the outer lateral surfaces of the lateral sidewall sections 14, 15 are formed with retention protrusions 20, 21 positioned between the upper plate portion 13 and the engagement ribs 17, 18, respectively, as shown in FIG. 7. These retention protrusions 20, 21 are of a protruding amount slightly smaller than the engagement ribs 17, 18 and are wedge-shaped such that the front side end faces thereof are substantially perpendicular and are gradually reduced in the protruding amounts towards their rear ends. The front edge of the upper plate portion 13 has a substantially arcuate-shaped cut-out 22 via which the rear end part of the disc cartridge 1 accommodated in the container casing 10 is exposed to outside, as shown in FIG. 10.

The resilient retention portions 23, 24, protruded from the rear ends of the lateral sidewall sections 14, 15 towards the cut-outs 14a, 15a, are each made up of resilient sections 23A, 24A and engagement sections 23B, 24B, formed as one with the distal ends of these resilient sections 23A, 24A, respectively. The resilient sections 23A, 24A are formed for being protruded from the rear ends of the lateral sidewall sections 14, 15 towards the rear sidewall section 16, and are of a width $l$ slightly smaller than the height H of the lateral sidewall sections 14, 15. The resilient sections 23A, 24A are formed at the rear ends of the lateral sidewall sections 14, 15 and are of substantially the same thickness as the lateral sidewall sections 14, 15 so as to be flush with the sidewall sections 14, 15, respectively.

The resilient sections 23A, 24A, protruded at the rear ends of the lateral sidewall sections 14, 15 with the width $l$ slightly smaller than the height H of the lateral sidewall sections 14, 15, are tapered so that the lower edges thereof are gradually reduced in width from the proximal end towards the distal ends thereof. The lower proximal ends of the resilient sections 23A, 24A are protuberantly formed at the rear ends of the lateral sidewall sections 14, 15 by being chamfered with a large R as shown in FIG. 9.

By configuring the resilient sections 23A and 24A as described above, the lateral sidewall sections 14, 15 may be of uniform thickness, as a result of which there is no risk of recesses being formed due to molding distortion on the outer lateral surfaces of the sidewall sections at the proximal ends of the resilient sections 23A, 24A. Since there is no risk of stress concentration at the proximal ends of the resilient sections 23A, 24A, a sufficient strength of the resilient sections 23A, 24A may be assured. These resilient sections 23A, 24A are formed of such a material which will permit the resilient sections 23A, 24A to be resiliently flexed in the direction along their thicknesses with the proximal ends thereof as the center of flexure.

The engaging sections 23B, 24B are each of a substantially U-shaped cross-section and have their apex points facing each other and protruded inwardly with respect to the resilient sections 23A, 24A, as shown in FIG. 7. The apex points of the engagement sections 23B, 24B are spaced apart from each other by a distance $W_c$ which is slightly smaller than a width $W_d$ of the disc cartridge 1 accommodated in the container casing 10, which is produced by combining the upper plate member 11 with the bottom member 12 by an operation as hereinafter explained, as shown in FIG. 10. The engagement sections 23B, 24B are engaged in the clamping recesses 9a, 9b, formed on both lateral surfaces of the disc cartridge 1 accommodated in the container casing 10, respectively.

The engagement sections 23B, 24B, having substantially the U-shaped cross-section, have their radii of curvature $d$ selected with respect to the opening diameter $D$ of the clamping recesses 9a, 9b formed on both lateral sides of the disc cartridge 1 so that the relation $d > D/2$ is satisfied. When these engagement sections 23B, 24B are engaged with the clamping recesses 9a and 9b, the outer peripheral surfaces of the engagement sections 23B, 24B are engaged with the clamping recesses 9a, 9b at front and rear points $B$, $C$ on the inner peripheral surfaces thereof, respectively, as shown in FIG. 11. Consequently, the resilient engagement sections 23, 24 positively retain and hold both lateral surfaces of the disc cartridge 1 contained in the container casing 10.

The bottom member 12 has a bottom plate portion 25 having the shape and the outer dimension substantially equal to those of the major surface of the disc cartridge 1 and the upper plate portion 13 of the upper member 11, and is produced by molding techniques, such as by injection molding, from a synthetic resin material exhibiting a high thermal resistance, such as ABS or polycarbonate resin.

The bottom member 12 has a pair of sidewall sections 26, 27 upstanding from the lateral edges on both lateral sides of the bottom plate portion 25, and another sidewall section 28 upstanding from the rear edge of the bottom plate portion 25, as shown in FIGs. 2, 4 and 5. Thus the sidewall sections 26 to 28 are integrally formed for delimiting U-shaped wall sections on the upper surface of the bottom plate portion 25 except its front side. Upper edge ribs 29, 30 are formed on the upper edges of the lateral sidewall sections 26 and 27 for defining steps relative to the outer parts of the upper edges of the sidewall sections 26, 27.

The inner surfaces of the lateral sidewall sections 26, 27 are formed with engagement recesses 31, 32 extending from the forward ends up to the rear ends thereof, and having the height substantially equal to that of the engagement ribs 17, 18 provided on the upper member 11. The lateral sidewall sections 26, 27 of the bottom plate member 12 has the crank-shaped cross-section by the upper edge ribs 29, 30 and the engagement recesses 31, 32, as shown in FIG. 4.

The rear ends of the lateral sidewall sections 26, 27 are formed with vertically extending recesses 26A, 27A, respectively. When the bottom member 12 and the upper member 11 are combined together to constitute the container casing 10, as will be explained subsequently, the recesses 26A, 27A are in register with the cut-outs 14a, 15a formed in the upper plate member 11. These recesses 26A, 27A act as clearances to permit the engagement sections 23A, 24A of the resilient retention portions 23, 24 to be resiliently deformed along their thicknesses. The inner surfaces of the lateral sidewall sections 26, 27 are formed with engagement grooves 33 at the forward ends thereof to increase the width of parts of the engagement recesses 31, 32 in the vertical direction.

The rear sidewall section 28 is formed with an inwardly protruded U-shaped engagement section 34 delimiting a horizontal rectangular recess 34A which has an inner shape and dimension substantially equal to the outer size and dimension of the engagement rib 19 formed on the rear sidewall section 16 of the upper member 11. The upper surface of the bottom plate portion 25 is formed with steps 25a to 25c on both lateral sides and on the rear side thereof. These steps 25a to 25c are of reduced height and prevent the disc cartridge 1 from being abutted on the mid portion of the bottom plate portion 25 when the disc cartridge 1 is housed within the container casing 10.

The front side of the bottom plate portion 25 has a substantially arcuate-shaped cut-out 35 which cooperates with a recess 22 formed in the front side of the upper plate member 11 for exposing the rear end portion of the disc cartridge 1 contained in the container casing 10 to outside.

The container casing 10 is completed by combining the above-described upper member 11 and the bottom member 12. That is, as the upper member 11 is positioned on the forward side of the bottom member 12, the rear ends of the engagement ribs 17, 18 of the upper member 11 are fitted into the opening sides of the engagement recesses 31, 32 of the bottom member 12. The upper member 11 is then pushed into the inside of the bottom member 12. The upper member 11 has their retention protrusions 20, 21 abutted against the opening edges of the engagement recesses 31, 32 of the bottom member 12. The retention protrusions 20, 21 have their lateral ends formed as inclined surfaces, so that, as the upper member 11 is strongly thrust further, the lateral sidewall sections 26, 27 are thrust open as the upper member 11 is intruded into the inside of the bottom member 12.

By thrusting the upper member 11 until its rear sidewall section 16 is caused to bear against the rear sidewall section 28 of the bottom plate member 12, the engagement rib 19 provided on the rear sidewall section 16 of the upper member 11 is engaged with the engagement section 34 provided on the rear sidewall section 28 of the bottom plate member 28. Thus the upper member 11 and the bottom member 12 are combined together with the lateral sides and the rear sides of the upper plate portion 13 and the bottom plate portion 25 connected to each other for constituting the container casing 10 having the aperture $\underline{A}$ with an opening size equal to the cross-sectional area of the disc cartridge 1 on its front side.

When the upper member 11 and the bottom member 12 are combined in this manner to produce the container casing 10, the inner surfaces of both sidewall sections thereof delimited by the mating sidewall sections 14, 26 and 15, 27 of the member 11, 12 now have the left and right resilient retention portions 23, 24 for retaining the disc cartridge 1 introduced via the aperture $\underline{A}$ of the container casing 10.

When the disc cartridge 1 is introduced into the casing 10 until its front end abuts on the rear end of the casing 10, the disc cartridge 1 is abutted against the inwardly protruded engagement sections 23B, 24B of the resilient retention portions 23, 24. Since the width $W_d$ of the disc cartridge 1 is wider than the distance $W_c$ between the inwardly protruded engagement sections 23B, 24B of the resilient engagement portions 23, 24, the resilient sections 23A, 24A are resiliently thrust outwards by inwardly introducing the disc cartridge 1.

When the disc cartridge 1 is introduced into the container casing 10 until the front end of the disc cartridge 1 is substantially caused to bear against the rear sidewall section of the casing 10, the engagement sections 23B, 24B of the resilient retention portions 23, 24 are positioned facing the clamping recesses 9a, 9b of the disc cartridge 1. Since the resilient sections 23A, 24A, flexed resiliently outwards by the lateral surfaces of the disc cartridge 1, are resiliently restored to their initial positions, the engagement sections 23B, 24B are engaged with the clamping recesses 9a, 9b, respectively. Thus the disc cartridge 1 is retained by the resilient retention portions 23, 24 such that the disc cartridge 1 is prevented from being ejected via the aperture $\underline{A}$ out of the casing 10 under shocks or vibrations.

When taking out the disc cartridge 1 contained in this manner into the container casing 10, the disc cartridge 1 is pulled out by gripping the rear portions of the disc cartridge 1 facing outwards via the arcuate cut-outs delimited by the cut-outs 22, 35 formed on the front sides of the upper member 11 and the bottom member 12.

This causes the engagement sections 23B, 24B to be thrust by both forward lateral sides of the clamping recesses 9a, 9b so that the resilient sections 23A, 24A are resiliently flexed outwards to release the state of retention of the disc cartridge 1 by the resilient retention portions 23, 24. By further pulling out the disc cartridge 1, the engagement sections 23B, 24B ride on both lateral surfaces of the disc cartridge 1. When the disc cartridge 1 is pulled out until its front end is past the resilient retention portions 23, 24, the resilient sections 23A, 24A are resiliently restored to their initial states. The disc cartridge 1 is pulled out of the container casing 10 by being pulled outwards further.

It is noted that the disc cartridge 1 contained within the container casing 10 by being retained by the resilient retention portions 23, 24 is configured so that the outer peripheral surfaces of the engagement portions 23B, 24B are engaged with the inner peripheral surfaces of the clamping recesses 9a, 9b at the two forward and rear points B and C of the opening parts of the clamping recesses 9a and 9b. Consequently, even although the shocks or vibrations are applied to the container casing 10, there is no risk of the disc cartridge 1 being wobbled within the inside of the container casing 10. The result is that there is no possibility of the resilient retention portions 23, 24 of the container casing 10 or the cartridge main body 5 of the disc cartridge 1 being scraped to produce the debris liable to be deposited on the surface of the optical disc 2 rotatably contained within the cartridge main body 5.

Although the foregoing description has been made of the container casing 10 used for containing the disc cartridge 1 in turn containing the optical disc 2, the present invention may be broadly applied to a container casing for a cartridge containing other types of the information recording medium. In addition, although the resilient retention portions 23, 24 are provided on the upper plate member 11, these resilient retention porions may also be provided on the bottom member 12.

**Claims**

1. A container casing (10) for a disc cartridge (1) comprising:

a first member (11) having a rectangular first planar surface section (13) and sidewall sections (14,15,16) formed integrally with said first planar surface section (13) and extending along three sides of said first planar surface section (13);

a second member (12) having a rectangular second planar surface section (25) and sidewall sections (26,27,28) formed integrally with said second planar surface section (25) and extending along three sides of said second planar surface section (25), said second member (12) having said second planar surface section (25) extending parallel to said first planar surface section (13) and having the sidewall sections (26,27,28) thereof connected to the sidewall sections (14-16) of said first member (11) for defining an aperture via which said disc cartridge (1) is inserted into the container casing (10); and

a pair of resilient holding portions (23,24) resiliently flexibly formed on two of said sidewall sections of said first member (11) or said second member (12) facing each other, said resilient holding portions (23,24) being engageable with mating recesses (9a,9b) in said disc cartridge (1) inserted via said aperture into the container casing (10) for holding the inserted disc cartridge (1).

2. A container casing (10) according to claim 1, wherein said resilient holding portions (23,24) each comprise an arm (23A,24A) and an engagement section (23B,24B) formed at the free end of said arm (23A,24A).

3. A container casing (10) according to claim 2, wherein said engagement section (23B,24B) comprises a U-shaped cross-section having a radius of curvature $\underline{d}$ related with a diameter $\underline{D}$ of the recess (9a,9b) of the dise cartridge $(\underline{1})$ by a formula d > D/2.

4. A container casing (10) according to claim 1, wherein the first member (11) or the second member (12) carrying said resilient holding portions (23,24) has cut-outs (14a,15a) formed between said planar surface section (13), said sidewall sections (14-16) and the resilient holding portions (23,24).

5. A container casing (10) according to claim 2, wherein each of said resilient holding portions (23,24) comprises an arm (23A,24B) extending substantially parallel to said sidewall section and an engagement section (23B,24B) having a U-shaped cross-section, said engagement section (23B,24B) being formed at the free end of said arm (23A,24A) for being protruded towards the inside of the container casing (10).

6. A container casing (10) according to claim 5, wherein said engagement section (23B,24B) comprises a U-shaped cross-section having a radius of curvature $\underline{d}$ related with a diameter $\underline{D}$ of the recess (9a,9b) of the disc cartridge $(\underline{1})$ by a formula d > D/2.

7. A container casing (10) according to claim 5, wherein the first member (11) or the second member (12) carrying said resilient holding portions (23,24) has cut-outs (14a,14b) formed between said planar surface section (13), said sidewall sections (14-16) and the resilient holding portions (23,24).

8. A container casing (10) according to claim 1, wherein each of said resilient holding portions (23,24) comprises an arm (23A,24A) forming an upper part of said sidewall section extending along said sidewall section and an engagement section (23B,24B) formed at the free end of said arm (23A,24A) for being protruded towards the inside of said container casing (10).

9. A container casing (10) according to claim 8, wherein said engagement section (23B,24B) has a U-shaped cross-section having a radius of curvature $\underline{d}$ related with a diameter $\underline{D}$ of the recess (9a,9b) of the disc cartridge (1) by a formula d > D/2.

10. A container casing (10) for a disc cartridge (1) comprising:

a first member (11) having a rectangular first planar surface (13) section and three sidewall sections (14-16) formed integrally with said first planar surface section (13) and extending along three sides of said first planar surface section (13);

a second member (12) of a synthetic resin material having a rectangular second planar surface section (25) and three sidewall sections (26-28) formed integrally with said second planar surface section (25) and extending along three sides of said second planar surface section (25), said second member (12) having said second planar surface section (25) extending parallel to said first planar surface section (13) and having the sidewall sections (26-28) thereof connected to the sidewall sections (14-16) of said first member (11) for defining an aperture via which said disc cartridge (1) is inserted into the container casing (10),

wherein the mutually parallel sidewall sections (14,15) of one of the first member (11) and the second member (12) have first and second protrusions (20,21), the remaining sidewall section (16) perpendicular to said mutually parallel sidewall sections (14,15) has an engagement rib (19), the mutually parallel sidewall sections (26,27) of the other of the first member (11) and the second member (12) have first and second grooves (30,31) engaged by said first and second protrusions (20,21), the remaining sidewall section (28) perpendicular to said mutually parallel sidewall sections (26,27) has an engagement recess (34) engaged by said engagement rib (19), the mutually parallel sidewall sections (14,15) of one of the first member (11) and the second member (12) has a pair of resilient holding portions (23,24) for holding the disc cartridge (1) inserted into the container casing (10) by being engaged with a recess (9a,9b) formed in the disc cartridge (1) inserted via said aperture, said resilient holding portions (23,24) being integrally formed for being resiliently flexible in directions towards the inside and the outside of said casing (10).

11. A container casing (10) according to claim 10, wherein said resilient holding portions (23,24) each comprise an arm (23A,24A) and an engagement section (23B,24B) formed at the free end of said arm (23A,24A).

12. A container casing according to claim 11, wherein said engagement section (23B,24B) comprises U-shaped cross-section having a radius of curvature $\underline{d}$ related with a diameter $\underline{D}$ of the recess (9a,9b) of the disc cartridge (1) by a formula d > D/2.

13. A container casing (10) according to claim 11, wherein the first member (11) or the second member (12) carrying said resilient holding portions (23,24) has cut-outs (14a,15a) formed between said planar surface section (13), said sidewall sections (14-16) and the resilient holding portions (23,24).

14. A container casing (10) according to claim 10, wherein each of said resilient holding portions (23,24) comprises arm (23A,24A) extending substantially parallel to said sidewall section and an engagement section (23B,24B) formed at the free end of said arm (23A,24A) for being protruded towards the inside of said container casing (10).

15. A container casing (10) according to claim 14, wherein said engagement section (23B,24B) has a U-shaped cross-section having a radius of curvature $\underline{d}$ related with a diameter $\underline{D}$ of the recess (9a,9b) of the disc cartridge (1) by a formula d > D/2.

16. A container casing (10) according to claim 14, wherein the first member (11) or the second member (12) carrying said resilient holding portions (23,24) has cut-outs (14a,15a) formed between said planar surface section (13), said sidewall sections (14-16) and the resilient holding portions (23,24).

17. A container casing (10) according to claim 10, wherein each of said resilient holding portions (23,24) comprises an arm (23A,24A) forming an upper part of said sidewall section extending along said sidewall section and an engagement section (23B,24B) formed at the free end of said arm (23A,24A) for being protruded towards the inside of said container casing (10).

18. A container casing (10) according to claim 17, wherein said engagement section (23B,24B) has a U-shaped cross-section having a radius of curvature $\underline{d}$ related with a diameter $\underline{D}$ of the recess (9a,9b) of the disc cartridge ($\underline{1}$) by a formula d > D/2.

19. A container casing (10) according to claim 10, wherein said other of the first member (11) and the second member (12) comprises deflection permissive portion (26A,27A) permitting the flexure of said resilient holding portion (23,24) in directions outwards the inside and the outside of the container casing (10).

20. A container casing (10) for a disc cartridge (1) comprising:

a first member (11) having a rectangular first planar surface section (13) and sidewall sections (14-16) formed integrally with said first planar surface section (13) and extending along three sides of said first planar surface section (13);

a second member (12) having a rectangular second planar surface section (25) and sidewall sections (26-28) formed integrally with said second planar surface section (25) and extending along three sides of said second planar surface section (25), said second member (12) having said second planar surface section (25) extending parallel to said first planar surface section (13) and having the sidewall sections (26-28) thereof connected to the sidewall sections (14-46) of said first member (11) for defining an aperture via which said disc cartridge (1) is inserted into the container casing (10); and

a pair of arm-shaped resilient holding portions (23,24) resiliently flexibly formed on two of said sidewall sections (14-16) of said first member (11) or said second member (12) facing each other, said arm-shaped resilient holding portions (23,24) being engageable with mating recesses (9a,9b) in said disc cartridge (1) inserted via said aperture for holding the inserted disc cartridge (1),

wherein the distance between the free ends of said arm-shaped resilient holding portions (23,24) is narrower than the length of the forward side of the disc cartridge (1) inserted via said aperture into the container casing (10).

21. A container casing (10) according to claim 20, wherein each of said arm-shaped resilient holding portions (23,24) comprises an arm (23A,24A) extending substantially parallel to said sidewall section and an engagement section (23B,24B) having a U-shaped cross-section, said engagement section (23B,24B) being formed at the free end of said arm (23A,24A) for being protruded towards the inside of said container casing (10).

22. A container casing (10) according to claim 20, wherein said engagement section (23B,24B) has a U-shaped cross-section having a radius of curvature $\underline{d}$ related with a diameter $\underline{D}$ of the recess (9a,9b) of the disc cartridge ($\underline{1}$) by a formula d > D/2.

FIG.1

# FIG.2

FIG.3

FIG.4

## FIG.5

## FIG.6

**FIG.7**

**FIG.8**

**FIG.9**

**FIG.10**

**FIG.11**

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| Y | EP-A-0 286 987 (ELBA-ORDNER-FABRIK KRAUT & MEIENBORN) <br> * column 12 - column 16; figures 13-15 * <br> --- | 1-22 | G11B33/04 |
| Y | US-A-4 838 422 (GREGERSON) <br> * column 3, line 34 - column 4, line 9 * <br> --- | 1-22 | |
| A,P, D | EP-A-0 564 155 (SONY) <br><br> * the whole document * <br> --- | 1-22 | |
| A | EP-A-0 490 671 (MITSUBISHI DENKI) <br><br><br><br> * column 7, line 23 - column 9, line 3; figures 4,5 * <br> ----- | 1,3,6,9, 10,12, 15,18, 20,22 | |
| | | | **TECHNICAL FIELDS SEARCHED** (Int.Cl.5) <br><br> G11B |

The present search report has been drawn up for all claims

| Place of search | Date of completion of the search | Examiner |
|---|---|---|
| THE HAGUE | 7 November 1994 | Sozzi, R |